# EUROPÄISCHE PATENTSCHRIFT

(11) **EP 4 122 438 B1**
(45) Veröffentlichungstag und Bekanntmachung des Hinweises auf die Patenterteilung: **14.05.2025**
(21) Anmeldenummer: 22159800.6
(22) Anmeldetag: 02.03.2022
(51) Int. Cl.: A61G 12/00, F16M 11/00

(54) **STATIONSWAGEN, INSBESONDERE VISITEN- UND/ODER PFLEGEWAGEN**
MEDICAL TROLLEY, IN PARTICULAR WARD TROLLEY AND CARE TROLLEY
CHARIOT DE SERVICE, EN PARTICULIER CHARIOT DE VISITE ET/OU DE SOINS

(30) Priorität: 23.07.2021 DE 202021103941 U
(43) Veröffentlichungstag der Anmeldung: 25.01.2023
(73) Patentinhaber: Optiplan Gesellschaft für optische Planungsgeräte mit beschränkter Haftung, 40489 Düsseldorf (DE)
(72) Erfinder: Lerner, Sabine, 40489 Düsseldorf (DE); Wagner, Kai, 40489 Düsseldorf (DE)
(74) Vertreter: Brinkmann & Partner

(56) Entgegenhaltungen:
- US-A1- 2002 013 640
- US-A1- 2005 062 238
- US-A1- 2009 309 466
- US-A1- 2012 323 362
- US-A1- 2015 227 127

## Beschreibung

Die Erfindung betrifft einen Stationswagen, insbesondere in der Ausgestaltung als Visiten- und/oder Pflegewagen für Krankenhäuser, Pflegeheime und sonstige Einrichtungen des Gesundheitswesens, mit einem Schrankteil, das einen frontseitig zugänglichen Stauraum zur Aufnahme von Utensilien aufweist, und mit einem am Schrankteil angeordneten Monitor, der von einer Säule getragen ist, wobei das Schrankteil einen den Stauraum bereitstellenden Schrankkorpus und ein vom Schrankkorpus getragenes Pult aufweist.

Ein Stationswagen der eingangs genannten, das heißt gattungsgemäßen Art ist aus der DE 20 2012 101 860 U1 bekannt. Alternativen sind bekannt aus US2005/062238, US2015/227127, US2009/309466, US2002/013640 oder US2012/323362.

Gemäß dem aus der DE 20 2012 101 860 U1 vorbekannten Stationswagen verfügt der Schrankkorpus des Schrankteils nicht nur über einen Stauraum zur Aufnahme von Utensilien, sondern auch über einen Kabelraum. Dabei ist der Kabelraum in Beschickungsrichtung des Stauraums hinter dem Stauraum angeordnet und vom Stauraum durch eine Zwischenwand getrennt. Der Kabelraum dient der Aufnahme von Kabeln, insbesondere von solchen, die bis zu dem von der Säule getragenen Monitor führen. Dabei ist die Säule nach Art eines Rohres ausgebildet und stellt zur Kabelführung ihrerseits einen Hohlraum bereit.

Zur sicheren Anordnung der den Monitor tragenden Säule am Schrankteil ragt die Säule mit ihrem monitorentfernten Ende bis in den Schrankkorpus hinein, und zwar bis in den vom Schrankkorpus bereitgestellten Kabelraum hinein. Dabei ist der Schrankkorpus rückwärtig von einer gebogen ausgebildeten Rückwand verschlossen, so dass das in den Kabelraum hineinragende Säulenende verwenderseitig weder zugänglich, noch sichtbar ist. Die Säule ist mithin innenseitig des Schrankkorpus am Schrankkorpus angeordnet.

Der Schrankkorpus stellt zwei im Kabelraum in Höhenrichtung verlaufende Führungsstege bereit, an denen die Säule angeordnet ist, wobei die Führungsstege die Säule zwischen sich aufnehmen.

Obgleich sich der aus der DE 20 2012 101 860 U1 vorbekannte Stationswagen im alltäglichen Praxiseinsatz bewährt hat, ist dieser nicht frei von Nachteilen. So wird die nur eingeschränkte Manövrierfähigkeit als nachteilig empfunden, die sich dadurch ergibt, dass die zur Abdeckung der vom Schrankkorpus aufgenommenen Säule einschließlich der die Säule abstützenden Führungsstege vorgesehene Rückwand des Schrankteils gebogen, und zwar mit Bezug auf den Stauraum des Schrankkorpus nach außen gewölbt ausgebildet ist.

Es ist deshalb ausgehend vom vorbeschriebenen Stand der Technik die **Aufgabe** der Erfindung, einen Stationswagen der gattungsgemäßen Art dahingehend weiterzuentwickeln, dass konstruktionsbedingt eine vereinfachte verwenderseitige Handhabung ermöglicht ist.

Zur **Lösung** dieser Aufgabe wird mit der Erfindung ein Stationswagen der eingangs genannten Art vorgeschlagen, der sich dadurch auszeichnet, dass die Säule schrankteilseitig eine Verbindungseinrichtung aufweist, unter deren Zwischenordnung die Säule außenseitig des Schrankkorpus am Pult angeordnet ist.

Zur Anordnung der den Monitor tragenden Säule am Schrankteil kommt erfindungsgemäß eine Verbindungseinrichtung zum Einsatz, mittels welcher die Säule mit ihrem monitorentfernten Ende außerhalb des Schrankkorpus, das heißt außenseitig desselben positioniert ist. Die Säule ragt mithin nicht in den vom Schrankkorpus bereitgestellten Innenraum hinein, ist mithin nicht innenseitig desselben positioniert.

Die Säule ist unter Zwischenordnung der Verbindungseinrichtung am Schrankteil angeordnet, wobei erfindungsgemäß zwei Alternativen vorgesehen sind. Die Säule kann unter Zwischenordnung der Verbindungseinrichtung entweder am Schrankkorpus oder am Pult angeordnet sein. In beiden Fällen ragt die Säule in schon vorbeschriebener Weise nicht in den vom Schrankkorpus bereitgestellten Innenraum hinein.

In vorteilhafter Weise kann aufgrund der erfindungsgemäßen Konstruktion auf die ausladende Ausgestaltung nach dem Stand der Technik, wonach der Schrankkorpus über zwei in Höhenrichtung verlaufende Führungsstege verfügt, zwischen denen das monitorentfernte Ende der Säule angeordnet ist, vollends verzichtet werden. Auch der zur Unterbringung der Säule nach dem Stand der Technik vorgesehene Kabelraum ist nicht mehr vonnöten, da etwaige Kabel direkt aus den Stauraum des Schrankkorpus kommend durch die Säule bis zum Monitor geführt werden können.

Der erfindungsgemäße Stationswagen ist damit bei gleichbleibend großem Stauraum weniger ausladend ausgebildet, was eine verwenderseitige vereinfachte Handhabung ermöglicht, insbesondere beim Manövrieren. Darüber hinaus benötigt der erfindungsgemäße Stationswagen weniger Stellfläche, was insbesondere im Falle des Nichtgebrauchs von Vorteil ist, da die benötigte Parkfläche minimiert ist.

Die erfindungsgemäße Konstruktion erlaubt darüber hinaus auch deshalb eine vereinfachte Handhabung, weil der Stationswagen mit seiner rückwärtigen Seite sicher an einer Gebäudewand positioniert werden kann. Denn im Unterschied zum Stand der Technik fehlt es an einer gewölbt ausgebildeten Rückwand, die einen solch positionssicheren Berührungskontakt mit einer Raumwand nicht gestattet. Denn anders als die nach dem Stand der Technik vorbekannte Konstruktion ermöglicht es die erfindungsgemäße Ausgestaltung, einen rückwärtig des Stationswagens vorgesehenen Rammschutz planparallel zu einer Raumwand auszubilden. Eine Rammschutzausgestaltung ist nach der aus dem Stand der Technik vorbekannten Konstruktion nicht möglich.

Die erfindungsgemäße Alternative, die Säule schrankteilseitig unter Zwischenordnung einer Verbindungseinrichtung am Pult anzuordnen, ist bevorzugt. Dies deshalb, weil so eine besonders einfache Konstruktion gegeben ist, die eine vereinfachte und damit preisgünstige Herstellung ermöglicht und die ferner insbesondere im Reparaturfall montage- bzw. demontagefreundlicher ist. Insbesondere die Zugänglichkeit der Verbindungseinrichtung ist bei einer Anordnung derselben am Pult verbessert.

Gemäß einem weiteren Merkmal der Erfindung ist vorgesehen, dass die Säule und die Verbindungseinrichtung einstückig oder quasi einstückig ausgebildet sind. Die einstückige oder quasi einstückige Ausgestaltung von Säule und Verbindungseinrichtung ermöglicht insbesondere eine vereinfachte Endmontage. Die Säule und die Verbindungseinrichtung liegen mithin als einstückiges Bauteil vormontiert vor, so dass eine bestimmungsgemäße Anordnung der Säule am Schrankteil in einfacher Weise dadurch ermöglicht ist, dass die Säule unter Zwischenordnung der Verbindungseinrichtung außenseitig des Schrankkorpus entweder am Schrankkorpus selbst oder am Pult angeordnet wird. Eine solche Anordnung erfolgt durch Verschrauben.

Gemäß der Erfindung ist vorgesehen, dass die Säule nach Art eines einseitig offenen Rohres ausgebildet ist und verbindungseinrichtungsseitig eine in einer Säulenwandung ausgebildete Ausnehmung aufweist. Durch diese Ausnehmung können schrankteilseitige Kabel in die Säule bis zum davon getragenen Monitor geführt werden. Dabei ist es besonders bevorzugt, als Monitor einen sogenannten All-in-one-Monitor zu verwenden, das heißt einen Monitor, in dessen Monitorgehäuse auch eine Rechnereinheit, eine batteriegestützte Stromversorgung sowie ein Energiemanagementsystem untergebracht sind. In diesem Fall bedarf es nur noch einer Kabelverbindung zum Monitor für etwaige Peripheriegeräte, wie zum Beispiel Tastatur und/oder Mouse. Derartige Peripheriegeräte können aber auch über Funk mit der vom Monitorgehäuse aufgenommenen Rechnereinheit in kommunikationstechnischer Verbindung stehen, so dass es in diesem Fall keinerlei Kabel bedarf.

Gemäß der Erfindung weist die Verbindungseinrichtung eine Flanschplatte mit einer Ausnehmung auf, in welche Ausnehmung die Säule mit ihrem monitorentfernten Endabschnitt eingesetzt ist. Die Flanschplatte kann als einfaches Flachmaterial ausgebildet sein. Die zur Aufnahme des monitorentfernten Endabschnitts der Säule vorgesehene Ausnehmung ist bevorzugterweise als Bohrung ausgeführt, insbesondere als geschlitzte Bohrung, was ein Einführen des monitorentfernten Endabschnittes der Säule in die Ausnehmung vereinfacht. Im endmontierten Zustand ist der Säule von der die Ausnehmung der Flanschplatte begrenzenden Randkante zumindest teilweise umgeben, so dass in diesem Kontaktbereich eine Verbindung von Flanschplatte und Säule beispielsweise durch Schweißen und/oder Kleben stattfinden kann.

Die Flanschplatte ermöglicht ein flächenhaftes Einleiten von im bestimmungsgemäßen Verwendungsfall auftretenden Tragkräften und -momenten, womit eine zu hohe Spitzenbelastung mit dem Vorteil vermieden ist, dass ein aus- oder abreißen der Flanschplatte vom Pult sicher vermieden ist.

Gemäß einem weiteren Merkmal der Erfindung ist vorgesehen, dass das Pult schrankkorpusseitig eine korrespondierend zur Flanschplatte ausgebildete Vertiefung aufweist. In diese Vertiefung ist die Flanschplatte im endmontierten Zustand eingesetzt, so dass sich vorzugsweise ein bündiger Abschluss zwischen der Flanschplatte und der dem Schrankkorpus zugewandten Pultrückwand ergibt. Zudem dient die Vertiefung als Montagehilfe, was eine positionssichere Ausrichtung der Verbindungseinrichtung und der damit verbundenen Säule in vorteilhafter Weise sicherstellt.

Gemäß einem weiteren Merkmal der Erfindung ist vorgesehen, dass die Verbindungseinrichtung mit dem Pult verschraubt ist. Die Flanschplatte weist zu diesem Zweck Bohrungen auf, durch die hindurch die Verbindungsschrauben im endmontierten Zustand geführt sind. Ein Verschrauben von Verbindungseinrichtung und Pult ist insbesondere aus Gründen der Demontierbarkeit im Reparaturfall bevorzugt. Aber auch ein Pultaustausch ist so in einfacher Weise ermöglicht. Dabei findet eine Demontage des Pults nicht nur im Reparaturfall statt, sondern auch aus hygienischen Gründen. Die erfindungsgemäße Ausgestaltung ermöglicht es mithin, ein Pult sowohl im konkreten Bedarfsfall als auch standardisiert im Wartungsfall insbesondere aus hygienischen Gründen in einfacher Weise austauschen zu können. Die Möglichkeit des Austausches ist bei aus dem Stand der Technik bekannten Konstruktionen nicht gegeben, weil hier typischerweise nicht lösbare Verbindungen, insbesondere Schweiß-Verbindungen vorgesehen sind. Die erfindungsgemäße Ausgestaltung zeichnet sich deshalb in vorteilhafter Weise gegenüber dem Stand der Technik durch ihre Nachhaltigkeit aus. Denn es ist weder im Reparaturfall noch aus Hygienegründen erforderlich, den gesamten Stationswagen auszutauschen. Das Schrankteil kann vielmehr wiederverwendet und im Bedarfsfall mit einem neuen Pult ausgerüstet werden.

Gemäß einem weiteren Merkmal der Erfindung ist eine die Vertiefung schrankkorpusseitig abdeckende Blende vorgesehen. Es ist so ein visuell ansprechender Abschluss gegeben und zudem sichergestellt, dass nicht ungewollt Verschmutzungen in die hohl ausgebildete Säule eindringen können.

Gemäß einer alternativen Ausgestaltung der Erfindung ist vorgesehen, dass die Verbindungseinrichtung nicht über eine Flanschplatte der vorbeschriebenen Art, sondern über zwei senkrecht zueinander ausgerichtete Anlageflächen verfügt. Die Ausgestaltung einer solchen Verbindungseinrichtung ist bevorzugt, wenn die Säule unter Zwischenordnung der Verbindungseinrichtung nicht am Pult, sondern am Schrankkorpus angeordnet ist. Im endmontierten Zustand liegen bei dieser Ausgestaltungsform die Anlageflächen der Verbindungseinrichtung an entsprechenden Gegenflächen des Schrankkorpus an, so dass eine insgesamt dauerhaft sichere und stabile Anordnung der den Monitor tragenden Säule am Schrankteil sichergestellt ist. Da die Anlageflächen senkrecht zueinanderstehen, können als sämtlichen Richtungen Torsions- und Biegebeanspruchungen aufgenommen und in den Schrankkorpus überführt werden.

Gemäß einem weiteren Merkmal der Erfindung ist vorgesehen, dass der Schrankkorpus ein Gestell mit einem Rahmen aufweist, an welchem Rahmen eine ebenflächig ausgebildete Rückwand angeordnet ist.

Die ebenflächig ausgebildete Rückwand ist in vorteilhafter Weise deshalb realisierbar, weil in schon vorbeschriebener Weise auf einen zum Stauraum zusätzlichen Raum zur Aufnahme des monitorentfernten Endes der Säule verzichtet ist. Mittels der erfindungsgemäß vorgesehenen Verbindungseinrichtung ist die Säule außenseitig des Schrankkorpus entweder am Schrankkorpus oder am Pult angeordnet, so dass sich anstelle des nach dem Stand der Technik vorgesehenen Kabelraums in Höhenrichtung unterhalb der Verbindungseinrichtung ein Freiraum einstellt. Im Unterschied zum Stand der Technik kann die Rückwand infolge dieser Ausgestaltung ebenflächig ausgebildet sein, da es einer außenseitigen Abdeckung dieses Freiraumes nicht bedarf. Dabei ist die ebenflächig ausgebildete Rückwand direkt am Gestell des Schrankkorpus angeordnet, womit ein einfacher Aufbau und eine damit einhergehende einfache Montage gegeben sind.

Gemäß einem weiteren Merkmal der Erfindung ist vorgesehen, dass das Gestell verbindungseinrichtungsseitig über eine Aussteifungsstrebe verfügt. Die Aussteifungsstrebe des Gestells sorgt zusätzlich für eine dauerhaft sichere und stabile Ausgestaltung des Schrankteils insgesamt, was eine positionssichere Anordnung der Säule am Schrankteil unterstützt. Zudem wird die Verwindungssteifigkeit des Gestells erhöht, so dass auch etwaige Querbelastungen besser aufgenommen werden können.

Gemäß einem weiteren Merkmal der Erfindung ist vorgesehen, dass die Verbindungseinrichtung gemäß der alternativen Ausführungsform mit ihren Anlageflächen an der Aussteifungsstrebe einerseits und an einem Holm des Rahmens andererseits anliegt. Es ist so die schon vorbeschriebene dauerhaft sichere und stabile Anordnung der Verbindungseinrichtung am Schrankkorpus gewährleistet.

Gemäß einem weiteren Merkmal der Erfindung ist in diesem Zusammenhang vorgesehen, dass die Verbindungseinrichtung mit der Aussteifungsstrebe und dem Holm verschraubt ist. Es ist so eine einfache Montage gewährleistet, und dies bei gleichzeitiger Möglichkeit einer einfachen Demontage, insbesondere im Reparaturfall.

Gemäß einem weiteren Merkmal der Erfindung ist in diesem Zusammenhang ferner vorgesehen, dass die Verbindungseinrichtung unter Zwischenschaltung der Rückwand mit dem Holm verschraubt ist. Auch durch diese konstruktive Maßnahme wird eine vereinfachte Montage zusätzlich unterstützt. Alternativ kann die Rückwand mit einer Ausklinkung für Verbindungseinrichtung ausgerüstet sein.

Gemäß einem weiteren Merkmal der Erfindung wird in diesem Zusammenhang ferner vorgeschlagen, dass die Aussteifungsstrebe eine Öffnung bereitstellt. Durch diese Öffnung kann im Bedarfsfall eine bis in die Säule reichende Verkabelung geführt werden. Zu diesem Zweck ist gemäß einem weiteren Merkmal der Erfindung vorgesehen, dass die von der Aussteifungsstrebe bereitgestellte Öffnung mit der säulenseitigen Ausnehmung zusammenwirkt. Es ist so ein insgesamt kompakter und platzsparender Aufbau gegeben. Ein etwaiges Kabel kann aus dem Stauraum durch die von der Aussteifungstrebe bereitgestellte Öffnung hindurch direkt durch die säulenseitige Ausnehmung in die Säule geführt werden. Es ist so eine kurze Kabelwegstrecke sichergestellt.

Gemäß der Erfindungsalternative ist es bevorzugterweise des Weiteren vorgesehen, dass das Pult die Verbindungseinrichtung oberseitig abdeckt. Damit ist die Verbindungseinrichtung quasi unterhalb des Pults versteckt angeordnet, so dass sie von oben für einen Verbraucher nicht einsehbar ist. Es ist so ein optisch ansprechender Eindruck sichergestellt. Ferner ergibt sich durch diese Konstruktion, dass die Verbindungseinrichtung zumindest abschnittsweise zwischen dem korpusseitigen Gestell einerseits und dem Pult andererseits angeordnet ist, was aus Stabilitätsgründen von Vorteil ist.

Gemäß einem weiteren Merkmal der Erfindung ist vorgesehen, dass das Pult verbindungseinrichtungsseitig eine Öffnung zur Durchführung der Säule aufweist. Bei einer Anordnung der Verbindungseinrichtung am Schrankkorpus übernimmt das Pult mithin hinsichtlich der Säule keine tragende oder abstützende Funktion. Allein die erfindungsgemäß vorgesehene Verbindungseinrichtung dient der Anordnung der Säule am Schrankkorpus, wobei das Pult den Schrankkorpus oberseitig abdeckt und zur Hindurchführung der Säule eine entsprechende Öffnung bereitstellt.

Gemäß der bevorzugten Ausführungsform ist die Verbindungseinrichtung direkt am Pult angeordnet, in welchem Fall eine tragende und abstützende Funktion aufnimmt. Dabei werden über die Verbindungseinrichtung in das Pult eingeleitete Kräfte und/oder Momente in das Gestell des Schrankkorpus abgeleitet, da das Pult mit diesem verbunden, vorzugsweise verschraubt ist.

Mit Blick auf die erfindungsgemäße Ausgestaltung geht eine Endmontage in einfacher Weise wie folgt vonstatten. In einem ersten Montageschritt ist zur rückwärtigen Abdeckung des Schrankkorpus die dafür vorgesehene Rückwand am Gestell des Schrankkorpus anzubringen. Gemäß der bevorzugten Ausführungsform ist alsdann die Säule unter Zwischenordnung der erfindungsgemäßen Verbindungseinrichtung am Pult anzubringen. Alsdann kann das Pult zusammen mit der Säule und dem davon getragenen Monitor am Gestell des Schrankkorpus angebracht werden. Gemäß der alternativen Ausführungsform erfolgt in einem zweiten Montageschritt zunächst die Anordnung der Säule am Schrankkorpus, und zwar unter Verwendung der hierfür entsprechend ausgebildeten Verbindungseinrichtung. Alsdann ist das Pult zu montieren, das von oben auf den Schrankkorpus aufzusetzen ist, wobei die schon montierte Säule durch die vom Pult bereitgestellte Öffnung zu führen ist. In einem letzten Montageschritt ist dann der Monitor am freien Ende der Säule anzubringen.

Gemäß einem weiteren Merkmal der Erfindung ist vorgesehen, dass die Verbindungseinrichtung ein die schrankteilseitige Stirnöffnung der Säule abdeckendes Verschlusselement aufweist. Dieses Verschlusselement kann nach Art einer Kappe ausgebildet sein und dient dazu, die stirnseitig offen ausgebildete Säule abzudecken. Ein ungehinderter Zugriff auf etwaige von der Säule beherbergte Kabel ist so vermieden.

Gemäß einem weiteren Merkmal der Erfindung ist vorgesehen, dass die Rückwand eine Revisionsöffnung aufweist. Durch diese Revisionsöffnung ist insbesondere der direkt unterhalb des Pults befindliche Stauraum des Schrankkorpus zugänglich. Im Falle etwaiger vom Schrankkorpus aufgenommener Peripheriegeräte ist so ein vereinfachter Zugriff auf etwaige zu den Peripheriegeräten führende Kabel ermöglicht.

Weitere Merkmale und Vorteile der Erfindung ergeben sich aus der nachfolgenden Beschreibung anhand der Figuren. Dabei zeigen:
- Fig. 1: in schematisch perspektivischer Frontansicht einen erfindungsgemäßen Stationswagen gemäß einer ersten Ausführungsform;
- Fig. 2: in schematisch perspektivischer Rückansicht den Stationswagen nach Fig. 1;
- Fig. 3: in schematischer Detailansicht einen Ausschnitt des Stationswagens nach Fig. 2;
- Fig. 4: in einer schematischen Detailansicht den Ausschnitt nach Fig. 3 mit abgenommener Blende;
- Fig. 5: in schematischer Draufsicht von unten das Pult des Stationswagens nach Fig. 1;
- Fig. 6: in schematisch perspektivischer Frontansicht einen erfindungsgemäßen Stationswagen gemäß einer zweiten Ausführungsform;
- Fig. 7: in schematischer Seitenansicht den Stationswagen nach Fig. 6;
- Fig. 8: in schematisch perspektivischer Rückansicht den Stationswagen nach Fig. 6;
- Fig. 9: in schematischer Detailansicht einen Ausschnitt des Stationswagens nach Fig. 8;
- Fig. 10: in einer weiteren Detailansicht den Stationswagen nach Fig. 8;
- Fig. 11: in schematischer Perspektivdarstellung ein Gestell des erfindungsgemäßen Stationswagens und
- Fig. 12: in schematischer Perspektivansicht ausschnittsweise eine Säule einschließlich einer Verbindungseinrichtung gemäß der zweiten Ausführungsform.

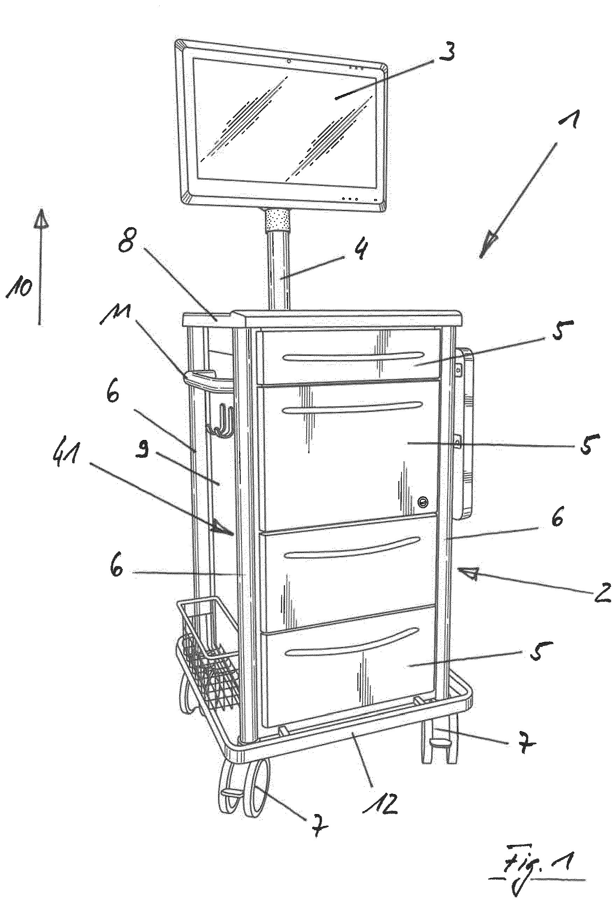

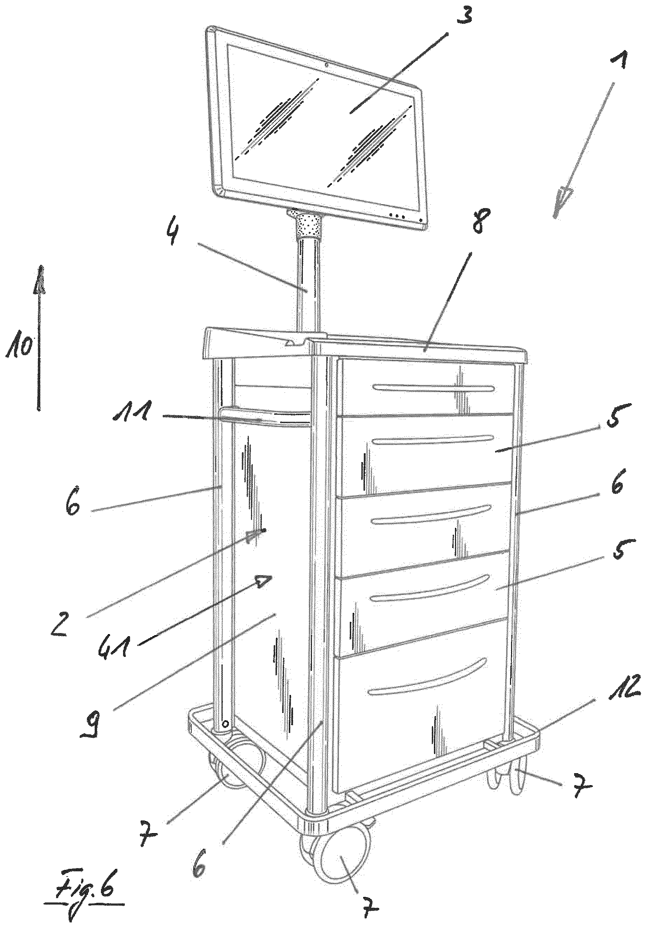

Die Figuren 1 bis 5 lassen in unterschiedlichen Ansichten einen erfindungsgemäßen Stationswagen 1 gemäß einer ersten Ausführungsform erkennen. Einen erfindungsgemäßen Stationswagen 1 gemäß einer zweiten Ausführungsform zeigen die Figuren 6 bis 12, jeweils ebenfalls in unterschiedlichen Ansichten. Die beiden Ausführungsformen unterscheiden sich insbesondere hinsichtlich einer im Weiteren noch näher beschriebenen Verbindungseinrichtung 18.

Der erfindungsgemäße Stationswagen 1 verfügt in an sich bekannter Weise über ein Schrankteil 2. Dieses Schrankteil 2 weist seinerseits einen Schrankkorpus 41 und ein vom Schrankkorpus 41 getragenes Pult 8 auf. Es ist ferner ein Monitor 3 vorgesehen, der mittels einer Säule 4 am Schrankteil 2 angeordnet ist.

Der Schrankkorpus 41 des Schrankteils 2 stellt einen Stauraum zur Aufnahme von Utensilien bereit. Gemäß der gezeigten Ausführungsbeispiele sind zur Aufnahme derlei Utensilien Schubladen 5 vorgesehen, die in Höhenrichtung 10 übereinander angeordnet sind.

Der Schrankkorpus 41 verfügt über insgesamt vier sich in Höhenrichtung 10 erstreckende Tragstreben 6, die jeweils zur verfahrbaren Ausgestaltung des Schrankteils 2 mit einer Tragrolle 7 ausgerüstet sind. Den Tragrollen 7 gegenüberliegend ist das von den Tragstreben 6 abgestützt Pult 8 vorgesehen, welches den Schrankkorpus 41 oberseitig verschließt.

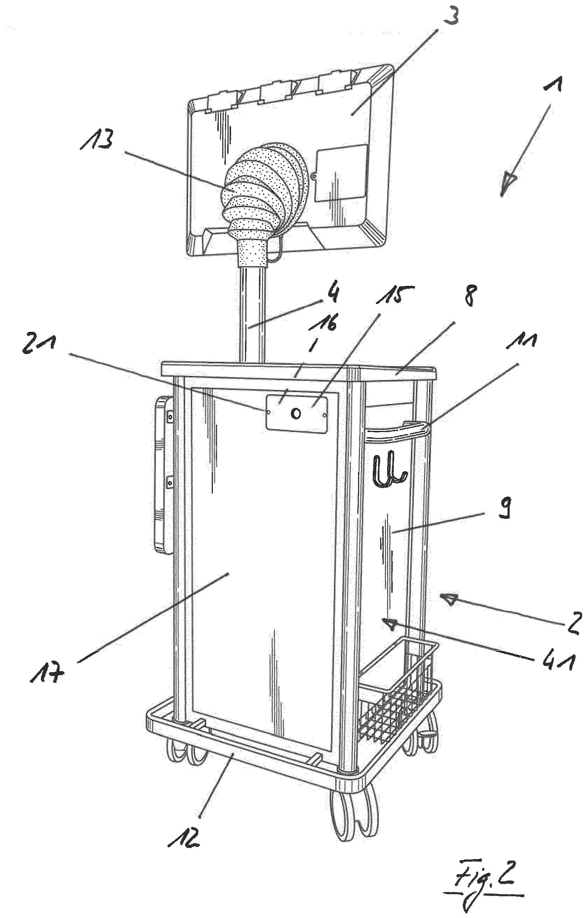

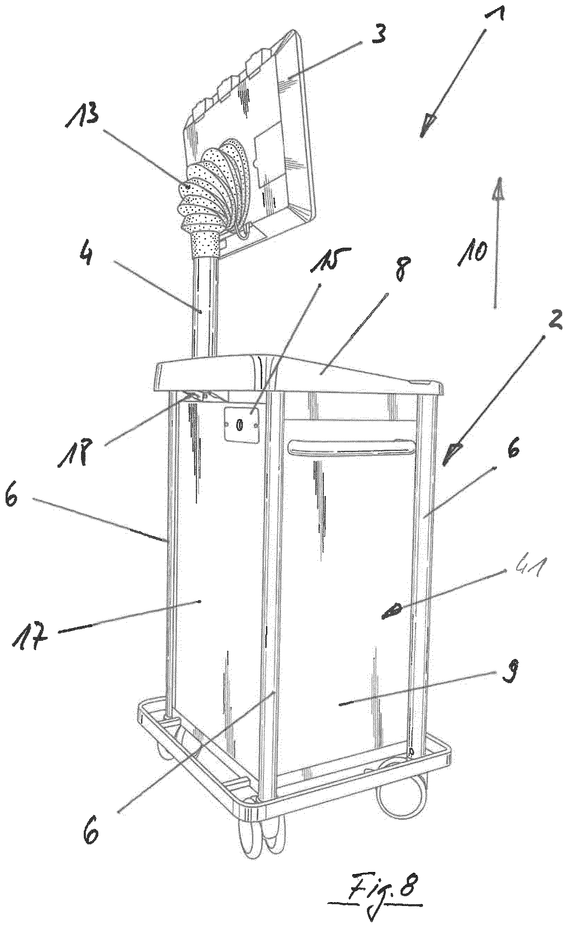

Der Schrankkorpus 41 verfügt des Weiteren über Seitenwände 9 sowie über eine Rückwand 17, wie sich dies hinsichtlich des ersten Ausführungsbeispiels aus Fig. 2 und hinsichtlich des zweiten Ausführungsbeispiels aus Fig. 8 ergibt. Dabei lassen die Figuren 2 und 8 jeweils auch erkennen, dass die Rückwand 17 im Unterschied zum Stand der Technik nach der DE 20 2012 101 860 U1 nicht gewölbt, sondern ebenflächig ausgebildet ist.

Für eine bessere Manövrierfähigkeit verfügt der Schrankkorpus 41 zudem über an den Seitenwänden 9 angebrachte Griffe 11.

Für einen Schutz des Schrankkorpus 41 vor möglichen Kollisionen ist zudem ein Rammschutz 12 vorgesehen, der als umlaufendes Rahmenteil ausgebildet ist. Dabei ist der rückwärtige Abschnitt des Rammschutzes 12 im Unterschied zum Stand der Technik nicht gebogen, sondern gradlinig verlaufend ausgebildet. Dies gestattet es, den Stationswagen 1 in einer Parkposition in einen linienförmigen Berührungskontakt mit einer Raumwand zu bringen. Dies ermöglicht die Einnahme einer positionssicheren Parkstellung, was bei der Konstruktion nach dem Stand der Technik gemäß der DE 20 2012 101 860 U1 nicht möglich ist.

Wie sich insbesondere aus einer Zusammenschau der Figuren 2 einerseits und 7 bzw. 8 andererseits ergibt, ist der Monitor 3 endseitig der Säule 4 angeordnet, wobei der Verbindungsbereich zwischen Säule 4 und Monitor 3 durch eine Manschette 13 abgedeckt ist, was insbesondere aus hygienischen Gründen von Vorteil ist.

Die Säule 4 weist erfindungsgemäß schrankteilseitig eine Verbindungseinrichtung 18 auf, unter deren Zwischenordnung die Säule 4 außenseitig des Schrankkorpus 41 entweder am Schrankkorpus 41 oder am Pult 8 angeordnet ist. Die Anordnung der Verbindungseinrichtung 18 am Pult zeigt das Ausführungsbeispiel nach den Figuren 1 bis 5, wohingegen das Ausführungsbeispiel nach den Figuren 6 bis 12 die Anordnung der Verbindungseinrichtung am Schrankkorpus 41 zeigt. Dabei ist die Anordnung der Verbindungseinrichtung 18 am Pult 8 gemäß der Figuren 1 bis 5 bevorzugt.

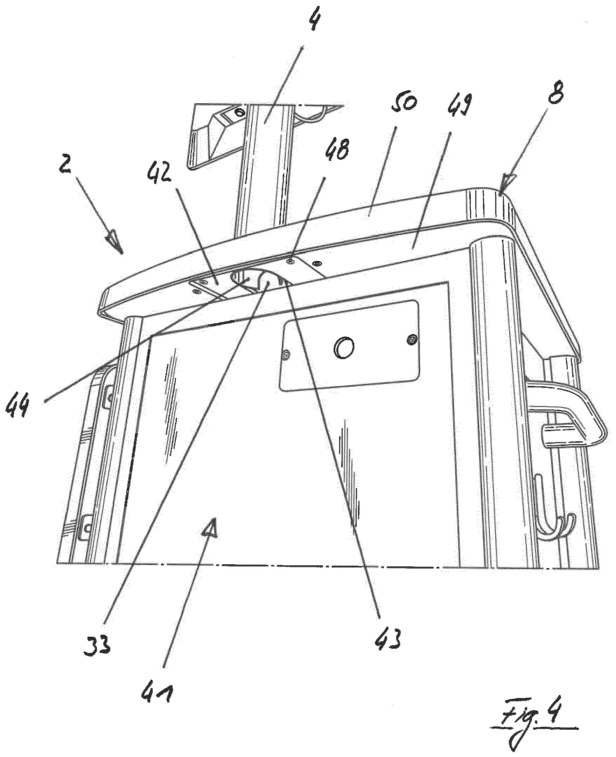

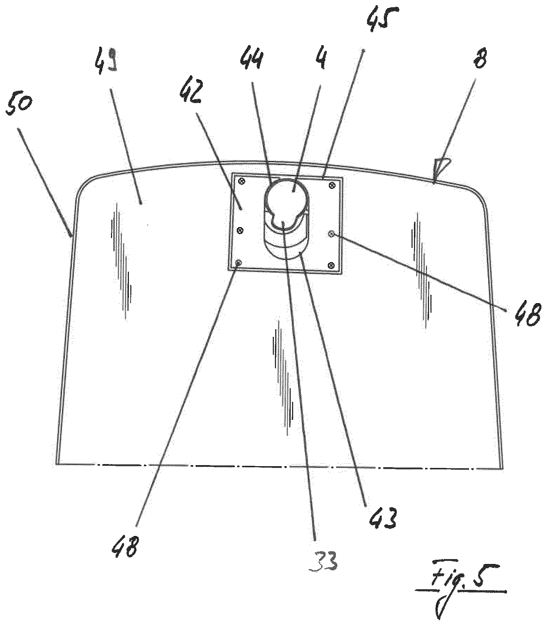

Wie sich aus einer Zusammenschau insbesondere der Figuren 4 und 5 ergibt, weist die Verbindungseinrichtung 18 eine Flanschplatte 42 auf. Diese Flanschplatte 42 ist mit einer Ausnehmung 43 ausgerüstet, in die die Säule mit ihrem monitorentfernten Endabschnitt 44 eingesetzt ist. Zwecks quasi einstückiger Ausbildung sind die Säule 4 und die Flanschplatte 42 miteinander verschweißt.

Das Pult 8 weist schrankkorpusseitig eine korrespondierend zur Flanschplatte 42 ausgebildete Vertiefung 45 auf. In diese Vertiefung 45 ist die Flanschplatte 42 im endmontierten Zustand eingesetzt. Zur Verbindung der Flanschplatte 42 mit dem Pult 8 ist eine Verschraubung mittels der Schrauben 48 vorgesehen.

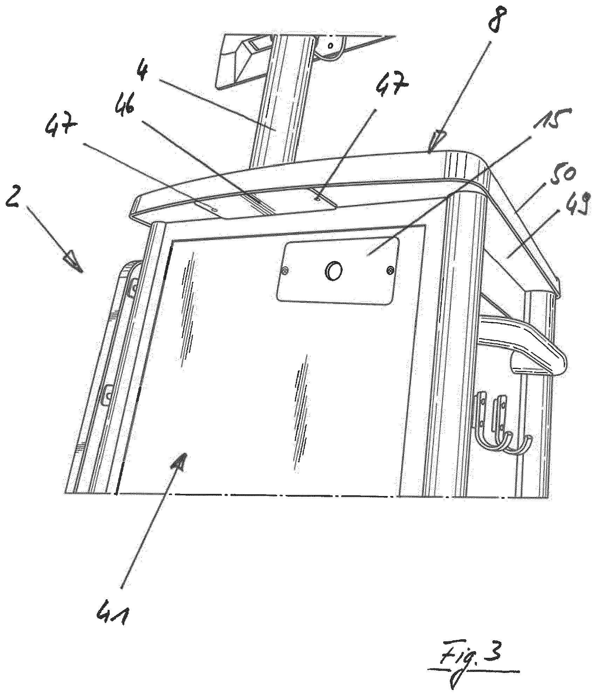

Wie insbesondere die Darstellung nach Fig. 4 erkennen lässt, schließt die Flanschplatte 42 bündig mit der Schrankkorpus zugewandten Unterseite des Pults 8 ab. Zur Abdeckung der Verbindungseinrichtung 18 im endmontierten Zustand dient eine Blende 46, wie in Fig. 3 zu erkennen ist. Dabei ist die Blende 46 mittels Schrauben 47 mit dem Pult 8 verschraubt.

Das Pult 8 weist sowohl gemäß der ersten als auch gemäß der zweiten Ausführungsform vorzugsweise eine Trägerplatte 49 aus einem Holzwerkstoff und eine damit verklebte Abdeckung 50 aus Kunststoff auf. Dabei nimmt die Abdeckung 50 die Trägerplatte 49 nach Art einer einseitig offen ausgebildeten Haube auf.

Im alltäglichen Praxisgebrauch kommt es häufig insbesondere zu einer Abnutzung und/oder Verschmutzung der Haube 50 des Pults 8. Die erfindungsgemäße Ausgestaltung vereinfacht einen Pultaustausch, da es für eine Demontierung lediglich erforderlich ist, die Schrauben 48 zu lösen, mittels welcher die Flanschplatte 42 am Pult 8 angebracht ist.

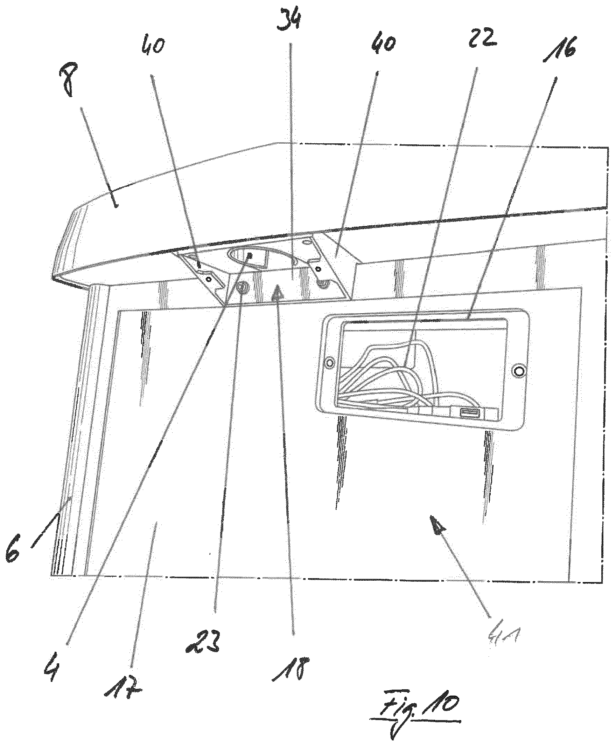

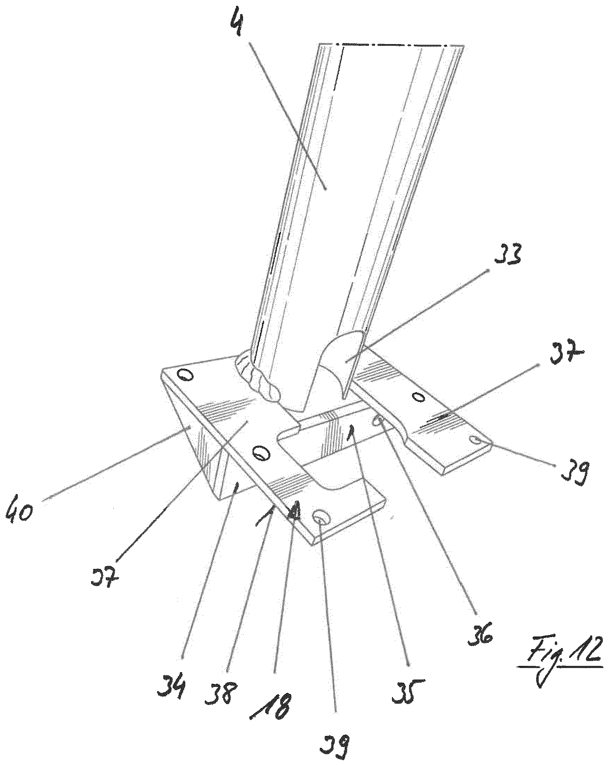

Die nach der Erfindung alternative Ausgestaltung ist in den Figuren 6 bis 12 gezeigt. Danach kommt eine Verbindungseinrichtung 18 zum Einsatz, die vorzugsweise wie in Fig. 12 dargestellt ausgebildet ist. Im endmontierten Zustand ist die Verbindungseinrichtung 18 außenseitig des Schrankkorpus 41 am Schrankkorpus 41 angeordnet, wie sich dies beispielsweise aus der Detaildarstellung nach Fig. 10 ergibt.

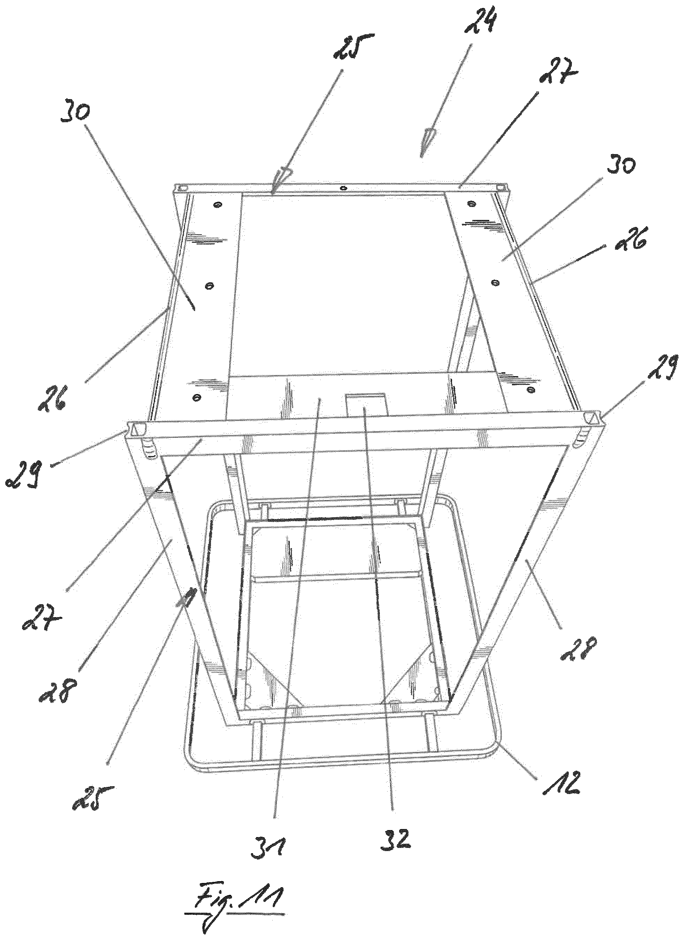

Der Schrankkorpus 41 des Schrankteils 2 verfügt über ein Gestell 24, wie dieses in Fig. 11 dargestellt ist. Dieses Gestell 24 verfügt über zwei Rahmen 25, die jeweils einen in Höhenrichtung 10 oberen Holm 27 aufweisen. Dabei sind die Holme 27 unter Zwischenordnung zweiter Streben 26 miteinander verbunden. Zur Verbindung der beiden Holme 27 sind des Weiteren Stützstreben 30 vorgesehen, auf denen im endmontierten Zustand das Pult 8 aufliegt.

Die Rahmen 25 verfügen des Weiteren über seitliche Holme 28, die jeweils mit Nuten 29 ausgerüstet sind. In diesen Nuten 29 kommen im endmontierten Zustand die in Fig. 11 nicht näher dargestellten Tragstreben 6 des Schrankkorpus 41 zu liegen.

Da Gestell 24 verfügt über eine weitere Strebe, nämlich die Aussteifungsstrebe 31. Diese ist am zugehörigen Holm 27 des rückwärtigen Rahmens 25 einerseits und an den Stützstreben 30 andererseits angeordnet. Es findet so eine Aussteifung statt, die, wie dies im Weiteren noch näher beschrieben werden wird, einer dauerhaft sicheren und stabilen Anordnung der Säule 4 am Schrankkorpus 41 dient.

Wie aus Fig. 11 ferner ersichtlich ist, verfügt die Aussteifungsstrebe 31 über eine im gezeigten Ausführungsbeispiel mittig platzierte Öffnung 32.

Zur Anordnung der Säule 4 am Schrankkorpus 41 dient die Verbindungseinrichtung 18, wie sie insbesondere in Fig. 12 dargestellt ist.

Die Verbindungseinrichtung 18 verfügt ihrerseits über ein Flachmaterial 34. Dieses stellt eine erste Anlagefläche 35 bereit.

Es sind des Weiteren zwei Flachteile 37 vorgesehen, die mit dem Flachmaterial 34 verschweißt sind. Die Flachteile 37 stellen mit ihrer dem Flachmaterial 34 zugewandten Unterseite eine zweite Anlagefläche bereit, nämlich die Anlagefläche 38.

Für eine zusätzliche Aussteifung der Verbindungseinrichtung 18 sowie für eine zusätzliche Verbindung des Flachmaterials 34 mit den Flachteilen 37 sind dreieckförmig ausgebildete Seitenelemente 40 vorgesehen. Diese sind sowohl mit dem Flachmaterial 34 als auch mit den Flachteilen 37 verschweißt.

Im endmontierten Zustand ist die Verbindungseinrichtung 18 bevorzugterweise mit dem Gestell 24 des Schrankkorpus 41 verschraubt, zu welchem Zweck sowohl das Flachmaterial 34 als auch die Flachteile 37 entsprechende Bohrungen 36 bzw. 39 aufweisen.

Wie sich aus Fig. 12 des Weiteren ergibt, weist die Säule 4 eine Ausnehmung 33 auf, die in der Mantelfläche der Säule 4 ausgebildet ist.

Der endmontierte Zustand der Verbindungseinrichtung 18 ergibt sich insbesondere aus der Darstellung nach Fig. 10. Wie diese Figur erkennen lässt, ist die Verbindungseinrichtung 18 außenseitig des Schrankkorpus 41 am Schrankkorpus 41 angeordnet. Dabei liegen die von der Verbindungseinrichtung 18 bereitgestellten Anlageflächen 35 und 38 an entsprechenden Gegenflächen des Gestells 24 an. Oberseitig ist die Verbindungseinrichtung 18 mittels des über die Rückwand 17 hinaus vorstehenden Pults 8 abgedeckt, so dass sie von oben für einen Verbraucher nicht sichtbar ist. Im gezeigten Ausführungsbeispiel ist die Verbindungseinrichtung 18 unter Zwischenordnung der Rückwand 17 am Gestell 24 angeordnet, das heißt die Rückwand 17 befindet sich zwischen dem zugehörigen Holm 27 des Rahmens 25 und dem Flachmaterial 34 der Verbindungseinrichtung 18.

Fig. 10 lässt ferner erkennen, dass die Rückwand 17 mit einer Revisionsöffnung 16 ausgerüstet ist, durch die hindurch etwaige vom Stauraum des Schrankkorpus 41 beherbergte Kabel 22 zugänglich sind. Derartige Kabel 22 können bis zum Monitor 3 reichen, zu welchem Zweck die Kabel 22 durch die Öffnung 32 der Aussteifungsstrebe 31 und die Ausnehmung 33 der Säule 4 zu führen sind. Über eine solche Revisionsöffnung 16 kann auch die schon vorbeschriebenen Ausführungsform nach den Figuren 1 bis 5 verfügen, wie in den Figuren dargestellt ist.

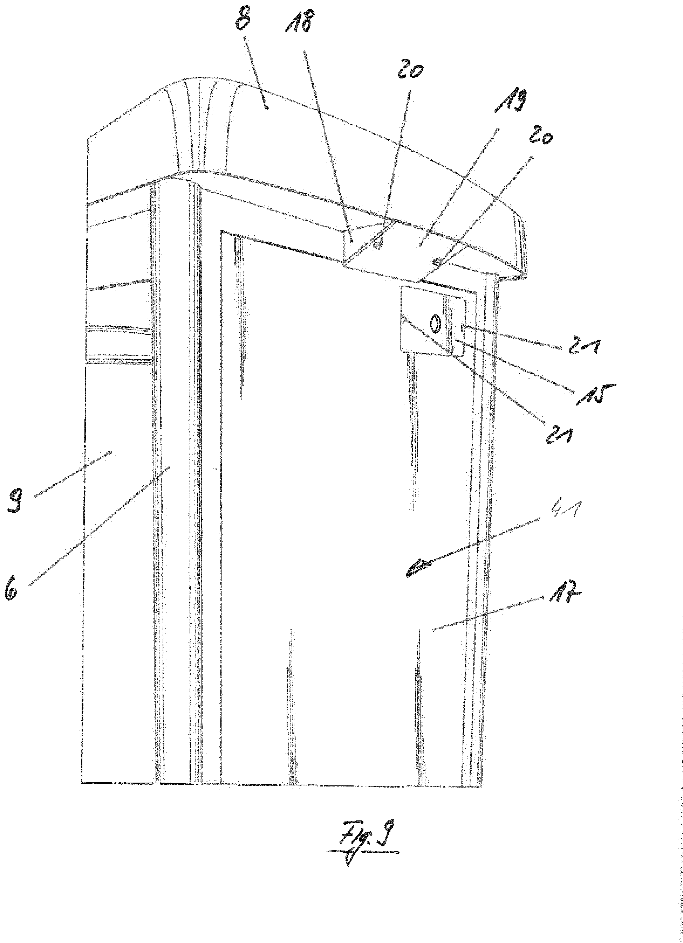

Fig. 9 lässt schließlich noch erkennen, dass im endmontierten Zustand sowohl die Revisionsöffnung 16 mittels einer Klappe 15 als auch die Verbindungseinrichtung 18 mittels eines Verschlusselements 19 abgedeckt sind. Zur Anordnung des Verschlusselements 19 an der Verbindungseinrichtung 18 bzw. zur Anordnung der Klappe 15 an der Rückwand 17 sind entsprechende Schrauben 20 bzw. 21 vorgesehen.

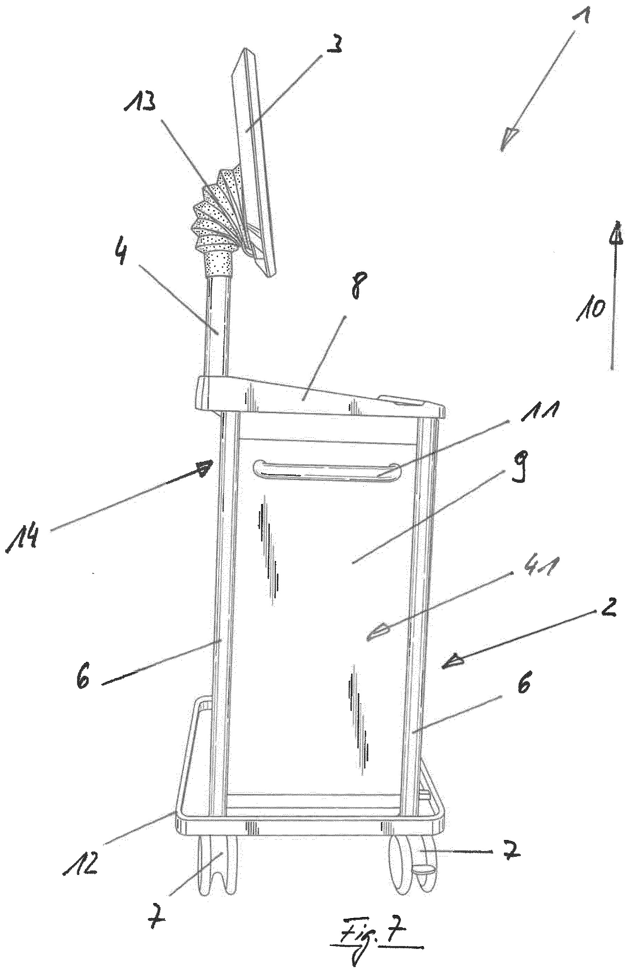

Wie insbesondere die Darstellung nach den Figuren 7 und 8 erkennen lässt, erbringt die vorbeschriebene Konstruktion insbesondere den Vorteil mit sich, dass anstelle einer gebogenen Rückwand eine ebenflächig ausgebildete Rückwand 17 zum Einsatz kommt. Dadurch entsteht in Höhenrichtung 10 unterhalb der Säule 4 ein Freiraum 14, so dass der erfindungsgemäße Stationswagen 1 im Unterschied zum Stand der Technik weniger ausladend ausgebildet ist und bei gleich großem Stauraum in Beschickungsrichtung des Stauraums in seinen geometrischen Abmessungen kleiner ausgebildet ist. Dies erbringt eine verbesserte Manövrierfähigkeit und minimiert die im Nichtgebrauchsfall benötigte Parkfläche.

### Bezugszeichen

- 1: Stationswagen
- 2: Schrankteil
- 3: Monitor
- 4: Säule
- 5: Schublade
- 6: Tragstrebe
- 7: Tragrolle
- 8: Pult
- 9: Seitenwand
- 10: Höhenrichtung
- 11: Griff
- 12: Rammschutz
- 13: Manschette
- 14: Freiraum
- 15: Klappe
- 16: Revisionsöffnung
- 17: Rückwand
- 18: Verbindungseinrichtung
- 19: Verschlusselement
- 20: Schraube
- 21: Schraube
- 22: Kabel
- 23: Schraube
- 24: Gestell
- 25: Rahmen
- 26: Strebe
- 27: Holm
- 28: Holm
- 29: Nut
- 30: Stützstrebe
- 31: Aussteifungsstrebe
- 32: Öffnung
- 33: Ausnehmung
- 34: Flachmaterial
- 35: Anlagefläche
- 36: Bohrung
- 37: Flachteil
- 38: Anlagefläche
- 39: Bohrung
- 40: Seitenelement
- 41: Schrankkorpus
- 42: Flanschplatte
- 43: Ausnehmung
- 44: Endabschnitt
- 45: Vertiefung
- 46: Blende
- 47: Schraube
- 48: Schraube
- 49: Trägerplatte
- 50: Abdeckung

## Patentansprüche

1. Stationswagen, insbesondere Visiten- und/oder Pflegewagen für Krankenhäuser, Pflegeheime und sonstige Einrichtungen des Gesundheitswesens, mit einem Schrankteil (2), das einen frontseitig zugänglichen Stauraum zur Aufnahme von Utensilien aufweist, und mit einem am Schrankteil (2) angeordneten Monitor (3), der von einer Säule (4) getragen ist, wobei das Schrankteil (2) einen den Stauraum bereitstellenden Schrankkorpus (41) und ein vom Schrankkorpus (41) getragenes Pult (8) aufweist und wobei die Säule (4) schrankteilseitig eine Verbindungseinrichtung (18) aufweist, unter deren Zwischenordnung die Säule (4) außenseitig des Schrankkorpus (41) am Pult (8) angeordnet ist,
**dadurch gekennzeichnet,**
**dass** die Säule (4) nach Art eines einseitig offenen Rohres ausgebildet ist und verbindungseinrichtungsseitig eine in einer Säulenwandung ausgebildete Ausnehmung (33) aufweist und dass die Verbindungseinrichtung (18) eine Flanschplatte (42) mit einer Ausnehmung (43) aufweist, in welche Ausnehmung (43) die Säule (4) mit ihrem monitorentfernten Endabschnitt (44) eingesetzt ist, wobei das Pult (8) schrankkorpusseitig eine korrespondierend zur Flanschplatte (42) ausgebildete Vertiefung (45) aufweist, in die die Flanschplatte (42) eingesetzt ist, so dass sich ein bündiger Abschluss zwischen der Flanschplatte (42) und der dem Schrankkorpus (41) zugewandten Pultrückwand ergibt, und wobei die Flanschplatte (42) mit dem Pult (8) verschraubt ist.

2. Stationswagen nach Anspruch 1, **dadurch gekennzeichnet, dass** die Säule (4) und die Verbindungseinrichtung (18) einstückig oder quasi einstückig ausgebildet sind.

3. Stationswagen nach Anspruch 1, **gekennzeichnet durch** eine die Vertiefung (45) schrankkorpusseitig abdeckende Blende (46).

4. Stationswagen nach einem der vorhergehenden Ansprüche, **dadurch gekennzeichnet, dass** der Schrankkorpus (41) ein Gestell (24) mit einem Rahmen (25) aufweist, an welchem Rahmen (25) eine ebenflächig ausgebildete Rückwand (17) angeordnet ist.

5. Stationswagen nach Anspruch 4, **dadurch gekennzeichnet, dass** das Gestell (24) verbindungseinrichtungsseitig über eine Aussteifungsstrebe (31) verfügt.

6. Stationswagen nach einem der vorhergehenden Ansprüche, **dadurch gekennzeichnet, dass** das Pult (8) eine Trägerplatte (49) aus einem Holzwerkstoff und eine damit verklebte Abdeckung (50) aus Kunststoff aufweist, wobei die Abdeckung (50) die Trägerplatte (49) nach Art einer einseitig offen ausgebildeten Haube aufnimmt.

## Claims

1. Medical trolley, in particular ward trolley and/or care trolley for hospitals, nursing homes and other healthcare facilities, the medical trolley comprising a cabinet part (2) having a front-accessible storage space for storing utensils, and comprising a monitor (3) disposed on the cabinet part (2), which monitor (3) is supported by a column (4), wherein the cabinet part (2) has a cabinet body (41) providing the storage space, and a desk (8) supported by the cabinet body (41), wherein the column (4) has a connection device (18) on the side of the cabinet body, under the interposition of which the column (14) is arranged on the desk (8) on the outer side of the cabinet body (41),
**characterized in**
**that** the column (4) is designed in the manner of an open tube and has a connection device-side recess (33) formed in the a column wall and in that the connection device (18) comprises a flange plate (42) having a recess (43), in which recess (43) the column (4) is inserted with its end portion (44) remote from the monitor, wherein the desk (8) has a recess (45) formed corresponding to the flange plate (42) on the side of the cabinet body, in which recess the flange plate (42) is inserted so that a flush closure between the flange plate (42) and the desk rear wall facing the cabinet body (41) is obtained, and wherein the flange plate (42) is screwed to the desk (8).

2. Medical trolley according to claim 1, **characterized in that** the column (4) and the connection device (18) are formed in one piece or quasi in one piece.

3. Medical trolley according to claim 1, **characterized by** a fascia board (46) covering the recess (45) on the cabinet body side.

4. Medical trolley according to any one of the preceding claims,
**characterized in that** the cabinet body (41) includes a rack (24) with a frame (25), on which frame (25) a planar rear wall (17) is arranged.

5. Medical trolley according to claim 4, **characterized in that** the rack (24) has a reinforcement strut (31) on the connection device side.

6. Medical trolley according to any one of the preceding claims,
**characterized in that** the desk (8) has a supporting plate (49) made of a wood material and a cover (50) made of plastic bonded therewith, wherein the cover (50) receives the supporting plate (49) in the manner of a hood which is open on one side.

## Revendications

1. Chariot de service, en particulier chariot de visite et/ou de soins pour hôpitaux, maisons de retraite et autres établissements de santé, le chariot de visite comprenant une partie d'armoire (2) ayant un espace de stockage accessible par l'avant pour stocker des ustensiles, et comprenant un moniteur (3) disposé sur la partie d'armoire (2), lequel moniteur (3) est supporté par une colonne (4), dans lequel la partie armoire (2) a un corps d'armoire (41) fournissant l'espace de stockage, et un bureau (8) supporté par le corps d'armoire (41), dans lequel la colonne (4) a un dispositif de connexion (18) sur le côté du corps d'armoire, sous l'interposition de laquelle la colonne (14) est disposée sur le bureau (8) sur le côté extérieur du corps d'armoire (41),
**caractérisé en ce que**
la colonne (4) est conçue à la manière d'un tube ouvert et présente un évidement (33) côté dispositif de connexion formé dans la paroi de la colonne et **en ce que** le dispositif de connexion (18) comprend une plaque à bride (42) présentant un évidement (43) dans lequel la colonne (4) est inséré avec sa partie d'extrémité (44) éloignée du moniteur, dans lequel le bureau (8) a un creux (45) formé correspondant à la plaque à bride (42) sur le côté du corps de l'armoire dans lequel la plaque à bride (42) est insérée de manière à obtenir une fermeture affleurante entre la plaque à bride (42) et la paroi arrière du bureau faisant face au corps de l'armoire (41), et dans lequel la plaque à bride (42) est vissée sur le bureau (8).

2. Chariot de service selon la revendication 1, **caractérisé en ce que** la colonne (4) et le dispositif de connexion (18) sont formés d'une seule pièce ou quasi d'une seule pièce.

3. Chariot de service selon la revendication 1, **caractérisé par** un panneau (46) recouvrant le creux (45) du côté du corps de l'armoire.

4. Chariot de service selon l'une quelconque des revendications précédentes, **caractérisé en ce que** le corps de l'armoire (41) comprend un châssis (24) avec un cadre (25) sur lequel est disposée une paroi arrière plane (17).

5. Chariot de service selon la revendication 4, **caractérisé en ce que** le support (24) comporte une entretoise de renforcement (31) du côté du dispositif de connexion.

6. Chariot médical selon l'une quelconque des revendications précédentes, **caractérisé en ce que** le pupitre (8) comporte une plaque de support (49) en bois et un couvercle (50) en matière plastique qui lui est lié, le couvercle (50) recevant la plaque de support (49) à la manière d'un capot ouvert sur un côté.
